# EUROPEAN PATENT SPECIFICATION

(11) **EP 2 391 089 B1**
(45) Date of publication and mention of the grant of the patent: **24.09.2014**
(21) Application number: 10163857.5
(22) Date of filing: 26.05.2010
(51) Int. Cl.: H04L 29/08, G06F 9/445

(54) **Configuration management**
Konfigurationsverwaltung
Gestion de la configuration

(43) Date of publication of application: 30.11.2011
(73) Proprietor: ABB Technology AG, 8050 Zürich (CH)
(72) Inventor: Starck, Janne, 65300, Vaasa (FI); Grädler, Mathias, 66100, Malax (FI)
(74) Representative: Kolster Oy Ab

(56) References cited:
- US-A1- 2002 120 723
- US-A1- 2007 112 446

## Description

### FIELD

The invention relates to configuration management of intelligent electronic devices (IED) within an electric power system.

### BACKGROUND

Electric power systems are complex systems having a distributed structure. The possibility to configure the system remotely is thus a necessity. The mere possibility for remote control is often, however, not enough but configurations need to be performed by plurality of people using the same or different configuration terminals, and from different physical locations. In addition to the remote control, also the possibility for local configuration of devices needs to be provided, as it is disclosed for instance in prior art documents US 2007/0112446 A1 or US 2002/0120723 A1.

Due to the various ways of configuration of the devices, management of the configurations in the network are difficult to handle. It is also difficult to achieve a complete view of the change history of a certain device, let alone the management of the history of the device configuration.

### BRIEF DESCRIPTION

An object of the present invention is thus to provide a method according to claim 6 and an arrangement according to claim 1 so as to alleviate the above disadvantages. The objects of the invention are achieved by a method and an arrangement, which are characterized by what is stated in the independent claims. The preferred embodiments of the invention are disclosed in the dependent claims.

An advantage of the invention is that it is easier to achieve a proper overview of the configuration history of the network and a certain device.

### DRAWINGS

In the following, the invention will be described in greater detail by means of preferred embodiments with reference to the attached drawings, in which
Figure 1 shows an embodiment of a configuration environment;
Figure 2 shows another embodiment of a configuration environment;
Figure 3 shows an embodiment of configuration software;
Figure 4 shows an embodiment of a method; and
Figure 5 shows another embodiment of a method.

### DESCRIPTION OF SOME EMBODIMENTS

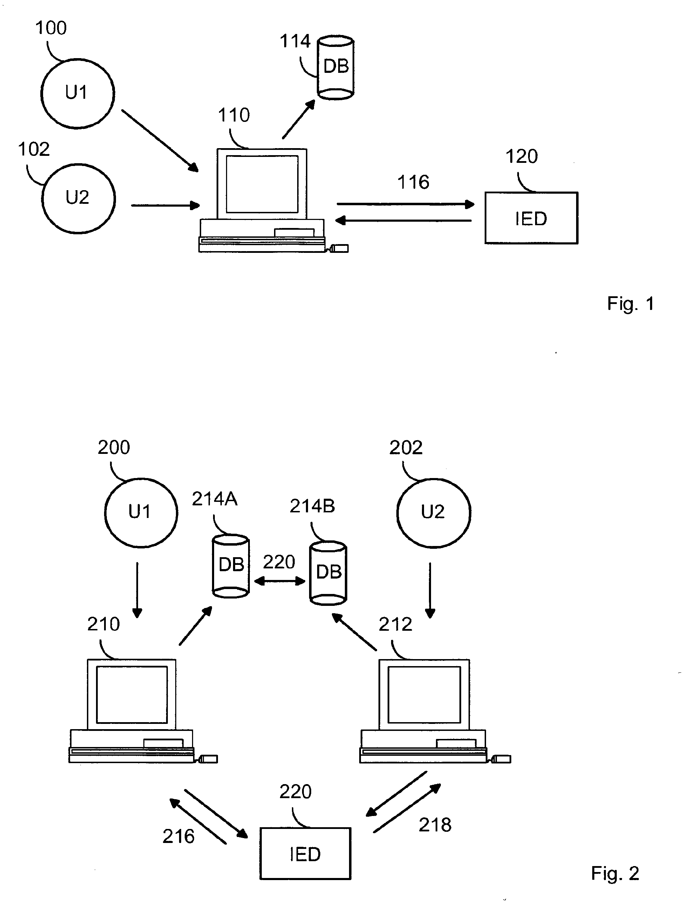

The following embodiments relate to configuration of intelligent electronic devices (IED). An IED can be defined as a device used in electric power industry and including microprocessor-based controllers of power system equipment, such as circuit breakers, transformers, and capacitor banks. Figure 1 shows one embodiment of a configuration environment. In the figure, there is provided a configuration apparatus 110, which is connected to an IED 120 via a communication link. The configuration apparatus 110 may be a stationary computer, a laptop or a mobile device, for instance. The communication link may comprise an Ethernet and/or a dedicated data connection and/or Internet connection and/or a mobile communication link, for instance. In the embodiment of Figure 1, two users, U1 (100) and U2 (102), use the same configuration terminal for configuration of the IED 120.

In a first use case, we may assume that U1 configures the IED. Configuration of the IED may comprise changing one or more operating parameters of the IED. Configuration, however, refers to changing a limited number of operating parameters as opposed to reloading a default setting (all parameter values) of an IED, for instance. Upon the configuration session, one or more change records are created. It is possible to create separate change records for every change carried out by U1. Alternatively to several change records, a single change record can be created from the configuration session.

The change record may contain an identifier of the configuration session. Such a record may include various pieces of information. The record may contain information to identify the user/executor which is U1 in this case. In addition, the record may contain information on the device used in the configuration, that is the computer 110 may be identified. As part of the change record, the date and/or time of the configuration session may be recorded.

The configuration record(s) is/are stored in a database 114. The database may be locally provided on the computer 110 or the computer may connect to the database 114 via a communication network.

Storage of the change records enables future utilization of the information contained in the change records. Future utilization may refer to a functionality such as browsing of a full list of change records, browsing a delta list between two moments of time, undoing one or more selected changes, and rolling the configuration of the IED back to a certain moment in time.

In a second use case, user 2, U2, uses the same computer 110 to configure the same IED 120. The configuration session may start with reading the current configuration of the IED 120 from the IED. User 2 may notice something interesting in the device configuration and may then wish to see the change history of the IED 120. For this purpose, the computer 110 reads the change history of the IED from the database 114. As a result, the computer shows on its display the change history as a list, where each change is provided as a separate record.

User 2 may wish to compare the current settings of the IED with earlier settings of the IED and possibly undo one or more changes previously performed on the IED. To undo a single change, the user may select a single record from the list, and select an undo function provided on the computer 110. As a result, a computer program provided on the computer 110 instructs to change the configuration parameter to a value it had before the change had took place. The undoing operation results in a new change record being created to the database.

Alternatively, U2 may wish to return the IED 120 to a certain state back in time. This may be the case if an error has been encountered in the electric power network and the state of the network is to be returned to a previous functioning state. In this mode, all the changes that have occurred after the desired point in time are rolled back, that is undone. Corresponding change records of the undone changes may be created in the database 114.

Figure 2 shows another embodiment of the configuration environment. In this case, each of the users 200, 202 uses their own respective configuration apparatuses 210, 212. Each device 210, 212 uses their respective connections 216, 218 to configure the IED 220. Each of the computers is also connected to respective databases 214A, 214B. The databases may be separate from the computers 210, 212 or, alternatively, it may reside locally at the computers.

As each of the computers has a database, 214A and 214B of its own, each computer has its own view of the configuration of the IED 220. If U2 starts a configuration session, it may first read the configuration of the IED 220 via the link 218. If it notices a mismatch between the configuration stored locally in the database 214B and the configuration read from the device 220, the computer 212 may start a synchronizing session of the databases 214A and 214B. As a result, the database 214B is updated with the latest change history of the IED from the database 214A, and vice versa.

Figures 1 and 2 show two embodiments of the configuration arrangements. In a further embodiment, a user configures the IED such that the user has no access to any database for storing a change record of the configuration operation. This may be the case in a situation where the user uses a physical user interface (keyboard) of the IED for performing the configuration. In another embodiment, the user may connect a laptop to the IED and perform the configuration operation by using configuration software running on the laptop. We may assume here that the laptop stores no change record of the configuration, which may be the case if the laptop uses a web interface to configuration the IED.

In these cases, the IED may store a change record locally in a nonvolatile memory of the IED. This data record may include one or more items of a group of items including a unique session identifier, identification information on the user/configuration device, the time/date of the configuration, and the configuration actions carried out during the configuration session. Subsequently, a configuration device may read the configuration record from the IED and store it in a central database accessible to multiple users. When the record(s) have been read from the IED, the record(s) may be erased from the memory of the IED.

In a still further embodiment, the IED is configured by using a web interface. In this case, the web interface may offer an import/export functionality to read change records from, and write change records to a remote database.

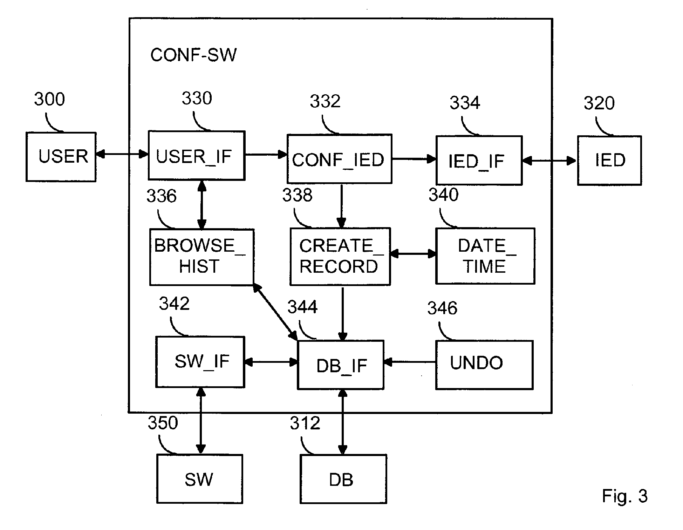

Figure 3 shows an embodiment of configuration software stored on a configuration terminal. The figure shows some possible software modules and interfaces between those. It is clear that the division into software modules needs not to be the one shown but there may be implementation-dependent alternatives. It is also clear that the software modules may connect with each other in a plurality of ways, of which only some are shown for illustrative purposes.

The configuration software comprises a user interface module 330 for providing a user interface towards the user. The user interface may provide the user with a selection of functions, such as "configuration of an IED" 332 and "browse change history of an IED" 336.

A CONF_IED 332 module may practically coordinate the actions needed to carry out the configuration of the IED. Data transfer between the configuration software and the IED 320 may be implemented by using an IED_IF 334 module. The CONF_IED 332 module may first receive logon information from a USER 300 via the module 330, and use this information to log into the IED 320 via the module 334. During the configuration, instructions given by the user 300 are delivered to the IED, and possible confirmation messages from the IED are delivered back along the same route.

A CREATE_RECORD module 338 provides functions that are needed to a store a change record of the configuration session. A DATE_TIME module 340 provides date and/or time information to be used in the change record. A DB_IF module provides the software functionality/interfaces needed to operate towards a database DB 312.

The configuration software may also comprise a BROWSE_HIST module 336 for browsing the change history of the IED 320. When requested by the user 300, the module 336 may provide a complete history listing of the changes carried out on the IED 320. In an embodiment, the history listing may comprise a delta listing. The delta listing compares, in time, two configuration states. The delta listing may show all parameter values that are different from each other at two moments.

Relating to this functionally, an UNDO module 346 may be provided to undo one or more changes/configurations that have been previously performed on the IED. The UNDO module is capable of undoing a single configuration, a plurality of configurations, or to return the configuration of the IED back in time to a moment of time given by the user 300. The UNDO module 346 may be connected to the CREATE_RECORD module to create change records of the configurations that are undone. Alternatively, the undone configurations may be removed from the change history of the IED.

Additionally there may be provided a SW_IF 342 module, which may be applied to synchronize the database 312 with another database 350.

The software functionality of Figure 3 may be provided on a computer comprising a processor and a memory. The software functionality may be stored in/loaded to the memory, and instructions provided by the software may be executed by the processor. To provide a user interface, common computer devices, such as a display, a keyboard and a mouse may be provided.

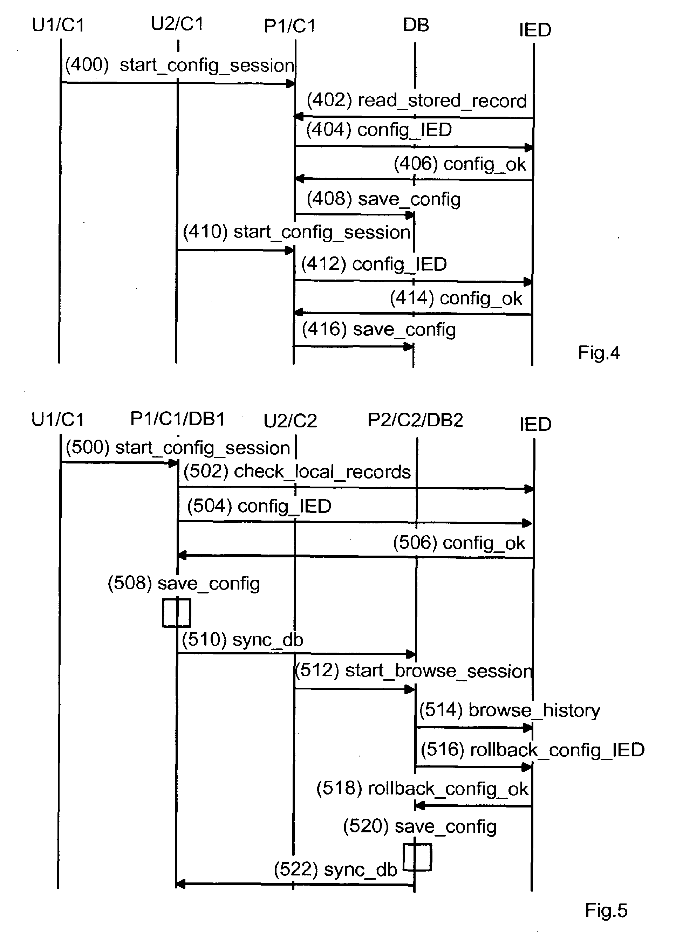

Figure 4 shows an embodiment of a method. This embodiment is associated with a use case similar to that of Figure 1, where user 1 (U1) and user 2 (U2) both work on the same configuration terminal (C1). A computer program (P1) is operating on the configuration terminal (C1), and both users use the same computer program/software. As further nodes, Figure 4 shows a database (DB) and an intelligent electronic device (IED) to be configured.

At first, U1 starts (400) a configuration session of an intelligent electronic device (IED) by using the program P1. Usage of the program and/or configuration of the IED is preferably password protected such that the user can be identified and it can be verified that the user is authorized to change the configuration settings of the IED. In this context, the IED refers to an electrical component of an electric power network. The IED may be a protective relay, for instance. In addition to the protective functionality, the protective relay may comprise a further functionality, such as locking with other relays, collecting information, and data transfer.

At the beginning of the configuration session, when the program connects to the IED, the program may first read (402) one or more change records that have possibly been stored on the IED. That is, if the IED has been configured locally using an MMI (Man Machine Interface) of the IED, the change record has been stored locally on the IED. Another use case when the change record may be stored locally is when the IED has been configured via a web interface.

The configuration (404) of the IED means changing one or more operating parameters of the intelligent electronic device. In the case of a protective relay, the operating parameter may be a tripping voltage, or the operate time of the relay, for instance.

When the configuration parameters have been set (406 config_ok), the configuration information is saved (408) in a database (DB). The database may be physically on the terminal C1, or may be accessible to the terminal C1 via a communication network. The configuration information comprises information on the person carrying out the change, which in this example is U1. Optionally also the terminal, in this case C1, may be identified.The configuration information also identifies the IED that has been configured or whose configuration settings have been changed.

The information preferably also saves the moment of the change, that is, the date and/or time information.

Furthermore, the stored information includes information on the one or more changes that have been carried out on the IED. The changes may be stored in the database as separate change records such that is possible to process each change separately. That is, a user of the database may wish to undo a single change in the database.

If the program P1 on C1 is not the only configuration environment for configuration of the IED, the change record(s) may be transmitted to one or more other configuration devices/databases. That is, at the end of the configuration session of U1, the program P1 may initiate a PUSH session (not shown in Fig. 4) to push the change record(s) created to possible other devices. Thus the separate devices are kept synchronized about the changes performed on the IED.

In Figure 4, following the configuration performed by user 1, user 2 also carries out configuration of the IED. The procedure is similar to the configuration carried out by user 1, that is, the user starts (410) the configuration software P1 at C1, performs (412) the configurations and, when the configurations have been completed (414), a configuration record is stored (416) in the database.

At the end of Figure 4, the database now includes one or more records created by user 1, and one or more records created by user 2.

The database stores all the changes carried out on the IED during its lifecycle. The database thus includes a full change history of the IED, identifying who has changed what, when, and wherefrom.

Similarly to the configuration session performed by U1, pushing of the change record created by U2 can be started.

Alternatively, the change records created on a program may be pushed to an external database periodically, such as daily, for instance.

Figure 5 shows another use case. In this use case, the two users U1 and U2 use different, physically separated configuration devices C1 and C2 corresponding to the situation in Figure 2. Each of the devices includes respective configuration software P1 and P2, and databases DB1, DB2.

At the start (500) of the configuration session, when U1 has logged in to change the configuration settings of the IED, the IED is locked such that no other user may log in and configure the IED at the same time as U1.

When other users have been prevented from configuring the IED, the configuration software P1 may check (502) whether the IED has locally stored change records. If such records exist, they are read/retrieved from the IED and stored in the database DB1. Then, user 1 (U1) carries out (504) configuration of the IED in a manner similar to that in Figure 4. After successful configuration (506), the configuration record(s) is/are also stored (508) in the database DB1.

In an embodiment, when U1 is about to finish the configuration session, the database DB1 may be synchronised (510) with possibly existing other databases. Figure 5 illustrates one such other database, DB2. The synchronisation may be carried out such that the change records stored in DB1, which are created by U1 and/or those read from the IED, are pushed to DB2. Alternatively, P1 may inform P2 that DB1 contains new records which may be read by P2/DB2 at the earliest convenience.

Subsequently, user 2 (U2) starts (512, 514) a browsing session. In the browsing session, U2 may browse the changes which have been made to the IED during its life cycle.

If U2 wants to undo a change, U2 may select a certain record, and cause (516) the configuration therein to be undone. When undoing the change, the configuration software may read the previous value of the configuration parameter, which is also stored in the data record in the database, and set the value of the parameter to the previous value.

Instead of changing the value of one parameter, the values of a plurality of parameters may be changed at the same time.

In an embodiment, a rollback configuration of the IED is applied, which is shown in Figure 5. This means that the status of the IED is rolled back to a certain state back in time. When rolling back the status of the IED to a previous state, all the changes from the most recent to the oldest until reaching the desired point in time are applied one by one to the IED.

When the desired changes have been done (518) on the IED, corresponding change records are stored (520) in the database DB2.

At the end of the configuration session of U2, the databases DB1 and DB2 may again be synchronised (522). In an alternative embodiment, the databases are not synchronised every time changes are made, but periodically. The purpose of the synchronisation is that the databases have substantially the same view of the situation of the configuration of the IED, and more generally, of the whole electric power network including a plurality of IED's.

Figure 5 shows one possible configuration arrangement where separate databases exist on configuration terminals C1 and C2. Other alternatives exist. There may exist a single database, which may be located on one of the computers C1 or C2. Alternatively, the database may be located on some other computer in a network accessible to the computers.

Alternatively to periodic synchronisation, the databases may be synchronised whenever a change is made to information contained in the database. That is, a change carried out to the data in the database may trigger a push operation for pushing the information to other database(s).

In a further embodiment, the IED may be configured locally. The local configuration here refers to configuration of the IED using a local user interface of the IED. To start the configuration of the device, the user preferably identifies himself/herself to the IED. In an embodiment, the configuration of the IED may be password protected. Local configuration may also be applied by coupling a laptop using a web interface to the IED, for instance.

In the case of local configuration, the change record is stored temporarily in the IED. The IED thus stores identification of the configurator/user, the time of the configuration session, and what has been carried out in the configuration session. This locally stored information may then be read to a project or a configuration software when next time connecting to the IED. This embodiment relates to previous embodiments such that configuration software, such as P1/C1 in Figure 4, for instance, may during its own configuration session read the locally stored one or more data records and place it/them time-wise to correct positions in the database.

In a further embodiment, the IED may be configured by using a web-interface. The configuration operation is similar to that explained in the previous figures. At the end of the configuration process, the change record may be exported to a database storing all the change records, or the change record may be stored on the IED.

It will be obvious to a person skilled in the art that, as technology advances, the inventive concept can be implemented in various ways. The invention and its embodiments are not limited to the examples described above but may vary within the scope of the claims.

## Claims

1. An arrangement of configuration of an intelligent electronic device of an electric power system, comprising
means for establishing (332) a configuration session from a configuration apparatus via a communication link for configuration of an intelligent electronic device (320);
means for performing (332) at least one configuration action on the intelligent electronic device (320), means for creating (338) a change record associated with the configuration action of the configuration session;
means for storing (344) the change record to a database provided on the configuration apparatus or separate from the configuration apparatus performing the configuration session to enable future utilization of information contained in the change record, **characterized in that** the arrangement comprises:
means for storing the change record temporarily locally on the intelligent electronic device (320) if the configuration session is performed locally on the intelligent electronic device (320) by using a physical configuration interface of the electronic device (320) or by a configuration terminal not storing the change record;
means for providing the stored change record to a remote configuration terminal in connection with a next configuration session performed on the intelligent electronic device (320); and
means for deleting the temporarily stored change record from the intelligent electronic device (320) when the stored change record has been provided to the remote configuration device.

2. An arrangement according to claim 1, **characterized in that** the change record comprises at least one element of a set of elements, comprising: a session identifier uniquely identifying the configuration session from other configuration sessions, an identifier of the intelligent electronic device (320), information of the executor of the configuration session, date and/or time of the configuration session, and information on one or more configuration actions of the configuration session.

3. An arrangement according to claim 1, **characterized in that** the arrangement comprises:
means for reading (344), a change list comprising a plurality of change records representing configuration actions carried out on the intelligent electronic device (320);
means for receiving (330), as an input from a user (300), a selection of one or more configuration actions from the change list the user wishes to undo; and
means for configuring (346) the intelligent electronic device such that one or more configuration actions selected from the change list are undone.

4. An arrangement according to claim 1, **characterized in that** the arrangement comprises:
means for reading (312) a change list comprising a plurality of change records representing configuration actions carried out on the intelligent electronic device;
means for receiving (300), as an input from a user, a moment of time, which configuration settings the user wishes to return the configuration of the electronic intelligent device (320); and
means for configuring (346) the intelligent electronic device (320) such that all the configuration actions that have been performed on the intelligent electronic device (320) after the moment of time received from the user (300) are undone.

5. An arrangement according to claim 1, **characterized in that** the arrangement comprises:
means for storing change records created on different configuration terminals (210, 212) in separate databases (214A, 214B); and
means for synchronising the change records of the separate databases (214A, 214B) by exchanging one or more change records there between.

6. A method of configuration of an intelligent electronic device of an electric power system, comprising:
establishing (400) a configuration session from a configuration apparatus via a communication link for configuration of an intelligent electronic device;
performing (404) at least one configuration action on the intelligent electronic device,
creating a change record associated with the configuration action of the configuration session; and
storing (408) the change record to a database provided on the configuration apparatus or separate from the configuration apparatus performing the configuration session to enable future utilization of information contained in the change record, **characterized by**:
storing the change record temporarily locally on the intelligent electronic device (320) if the configuration session is performed locally on the intelligent electronic device (320) by using a physical configuration interface of the electronic device (320) or by a configuration terminal not storing the change record;
providing the stored change record to a remote configuration terminal in connection with a next configuration session performed on the intelligent electronic device (320); and
deleting the temporarily stored change record from the intelligent electronic device (320) when the stored change record has been provided to the remote configuration device.

7. A method according to claim 6, **characterized in that** the change record comprises at least one element of a set of elements, comprising: a session identifier uniquely identifying the configuration session from other configuration sessions, an identifier of the intelligent electronic device, information on the executor of the configuration session, time of the configuration session, and information of one or more configuration actions on the configuration session.

8. A method according to claim 6, **characterized in that** the method comprises:
reading (514), in a configuration terminal, a change list comprising a plurality of change records representing configuration actions carried out on the intelligent electronic device;
receiving, as an input from a user, a selection of one or more configuration actions from the change list the user wishes to undo; and
configuring (516) the intelligent electronic device such that one or more configuration actions selected from the change list are undone.

9. A method according to claim 6, **characterized in that** the method comprises:
reading (514), in a configuration terminal, a change list comprising a plurality of change records representing configuration actions carried out on the intelligent electronic device;
receiving, as an input from a user, a moment of time, which configuration settings the user wishes to return the configuration of the electronic intelligent device;
undoing (516) the configuration actions that have been performed on the intelligent electronic device after the moment of time received from the user.

10. A method according to claim 6, **characterized in that** the method comprises:
storing (508, 520) change records created on different configuration terminals in separate databases;
synchronising (510, 522) the change records of the separate databases by exchanging one or more change records there between.

11. A computer program product encoding a computer program of instructions for executing a computer process according to a method of any preceding claim 6 to 10 when run on a computers.

## Patentansprüche

1. Anordnung zur Konfiguration einer intelligenten elektronischen Einrichtung eines Stromversorgungssystems, umfassend
Mittel zum Einrichten (332) einer Konfigurationssitzung von einem Konfigurationsgerät über eine Kommunikationsstrecke zur Konfiguration einer intelligenten elektronischen Einrichtung (320);
Mittel zum Durchführen (332) mindestens einer Konfigurationsaktion auf der intelligenten elektronischen Einrichtung (320), Mittel zum Erzeugen (338) einer mit der Konfigurationsaktion der Konfigurationssitzung assoziierten Änderungsaufzeichnung;
Mittel zum Speichern (344) der Änderungsaufzeichnung in einer Datenbank, die auf dem Konfigurationsgerät bereitgestellt oder getrennt vom Konfigurationsgerät ist, das die Konfigurationssitzung durchführt, um künftige Nutzungen von in der Änderungsaufzeichnung enthaltenen Informationen zu ermöglichen, **dadurch gekennzeichnet, dass** die Anordnung Folgendes umfasst:
Mittel zum temporären Speichern der Änderungsaufzeichnung lokal auf der intelligenten elektronischen Einrichtung (320), falls die Konfigurationssitzung lokal auf der intelligenten elektronischen Einrichtung (320) durchgeführt wird, durch Nutzung einer physikalischen Konfigurationsschnittstelle der elektronischen Einrichtung (320) oder durch ein die Änderungsaufzeichnung nicht speicherndes Konfigurationsendgerät;
Mittel zum Bereitstellen der gespeicherten Änderungsaufzeichnung für ein entferntes Konfigurationsendgerät in Verbindung mit einer nächsten Konfigurationssitzung, die auf der intelligenten elektronischen Einrichtung (320) durchgeführt wird; und
Mittel zum Löschen der temporär gespeicherten Änderungsaufzeichnung von der intelligenten elektronischen Einrichtung (320), wenn die gespeicherte Änderungsaufzeichnung für die entfernte Konfigurationseinrichtung bereitgestellt worden ist.

2. Anordnung nach Anspruch 1, **dadurch gekennzeichnet, dass** die Änderungsaufzeichnung mindestens ein Element einer Menge von Elementen umfasst, umfassend: einen Sitzungsbezeichner, der die Konfigurationssitzung unter anderen Konfigurationssitzungen eindeutig identifiziert, einen Bezeichner der intelligenten elektronischen Einrichtung (320), Informationen des Ausführers der Konfigurationssitzung, Datum und/oder Uhrzeit der Konfigurationssitzung und Informationen zu einer oder mehreren Konfigurationsaktionen der Konfigurationssitzung.

3. Anordnung nach Anspruch 1, **dadurch gekennzeichnet, dass** die Anordnung Folgendes umfasst:
Mittel zum Lesen (344) einer Änderungsliste, die eine Vielzahl von Änderungsaufzeichnungen umfasst, die auf der intelligenten elektronischen Einrichtung (320) ausgeführte Konfigurationsaktionen darstellen;
Mittel zum Empfangen (330) einer Auswahl einer oder mehrerer Konfigurationsaktionen aus der Änderungsliste, die ein Benutzer (300) rückgängig machen möchte, als Eingabe von dem Benutzer; und
Mittel zum Konfigurieren (346) der intelligenten elektronischen Einrichtung, so dass eine oder mehrere aus der Änderungsliste ausgewählte Konfigurationsaktionen rückgängig gemacht werden.

4. Anordnung nach Anspruch 1, **dadurch gekennzeichnet, dass** die Anordnung Folgendes umfasst:
Mittel zum Lesen (312) einer Änderungsliste, die eine Vielzahl von Änderungsaufzeichnungen umfasst, die auf der intelligenten elektronischen Einrichtung ausgeführte Konfigurationsaktionen darstellen;
Mittel zum Empfangen (300) eines Zeitpunkts, auf dessen Konfigurationseinstellungen ein Benutzer die Konfiguration der elektronischen intelligenten Einrichtung (320) zurücksetzen möchte, als Eingabe von dem Benutzer; und
Mittel zum Konfigurieren (346) der intelligenten elektronischen Einrichtung (320), so dass alle Konfigurationsaktionen, die nach dem vom Benutzer (300) empfangenen Zeitpunkt auf der intelligenten elektronischen Einrichtung (320) durchgeführt worden sind, rückgängig gemacht werden.

5. Anordnung nach Anspruch 1, **dadurch gekennzeichnet, dass** die Anordnung Folgendes umfasst:
Mittel zum Speichern von auf unterschiedlichen Konfigurationsendgeräten (210, 212) erzeugten Änderungsaufzeichnungen in getrennten Datenbanken (214A, 214B); und
Mittel zum Synchronisieren der Änderungsaufzeichnungen der getrennten Datenbanken (214A, 214B) durch Austauschen einer oder mehrerer Änderungsaufzeichnungen dazwischen.

6. Verfahren zur Konfiguration einer intelligenten elektronischen Einrichtung eines Stromversorgungssystems, umfassend:
Einrichten (400) einer Konfigurationssitzung von einem Konfigurationsgerät über eine Kommunikationsstrecke zur Konfiguration einer intelligenten elektronischen Einrichtung;
Durchführen (404) mindestens einer Konfigurationsaktion auf der intelligenten elektronischen Einrichtung,
Erzeugen einer mit der Konfigurationsaktion der Konfigurationssitzung assoziierten Änderungsaufzeichnung; und
Speichern (408) der Änderungsaufzeichnung in einer Datenbank, die auf dem Konfigurationsgerät bereitgestellt oder getrennt vom Konfigurationsgerät ist, das die Konfigurationssitzung durchführt, um künftige Nutzungen von in der Änderungsaufzeichnung enthaltenen Informationen zu ermöglichen, **gekennzeichnet durch** Folgendes:
temporäres Speichern der Änderungsaufzeichnung lokal auf der intelligenten elektronischen Einrichtung (320), falls die Konfigurationssitzung lokal auf der intelligenten elektronischen Einrichtung (320) durchgeführt wird, **durch** Nutzung einer physikalischen Konfigurationsschnittstelle der elektronischen Einrichtung (320) oder **durch** ein die Änderungsaufzeichnung nicht speicherndes Konfigurationsendgerät;
Bereitstellen der gespeicherten Änderungsaufzeichnung für ein entferntes Konfigurationsendgerät in Verbindung mit einer nächsten Konfigurationssitzung, die auf der intelligenten elektronischen Einrichtung (320) durchgeführt wird; und
Löschen der temporär gespeicherten Änderungsaufzeichnung von der intelligenten elektronischen Einrichtung (320), wenn die gespeicherte Änderungsaufzeichnung für die entfernte Konfigurationseinrichtung bereitgestellt worden ist.

7. Verfahren nach Anspruch 6, **dadurch gekennzeichnet, dass** die Änderungsaufzeichnung mindestens ein Element einer Menge von Elementen umfasst, umfassend: einen Sitzungsbezeichner, der die Konfigurationssitzung unter anderen Konfigurationssitzungen eindeutig identifiziert, einen Bezeichner der intelligenten elektronischen Einrichtung, Informationen zum Ausführer der Konfigurationssitzung, Uhrzeit der Konfigurationssitzung und Informationen einer oder mehrerer Konfigurationsaktionen bei der Konfigurationssitzung.

8. Verfahren nach Anspruch 6, **dadurch gekennzeichnet, dass** das Verfahren Folgendes umfasst:
Lesen (514) einer Änderungsliste, die eine Vielzahl von Änderungsaufzeichnungen umfasst, die auf der intelligenten elektronischen Einrichtung ausgeführte Konfigurationsaktionen darstellen, in einem Konfigurationsendgerät;
Empfangen einer Auswahl einer oder mehrerer Konfigurationsaktionen aus der Änderungsliste, die ein Benutzer rückgängig machen möchte, als Eingabe von dem Benutzer; und
Konfigurieren (516) der intelligenten elektronischen Einrichtung, so dass eine oder mehrere aus der Änderungsliste ausgewählte Konfigurationsaktionen rückgängig gemacht werden.

9. Verfahren nach Anspruch 6, **dadurch gekennzeichnet, dass** das Verfahren Folgendes umfasst:
Lesen (514) einer Änderungsliste, die eine Vielzahl von Änderungsaufzeichnungen umfasst, die auf der intelligenten elektronischen Einrichtung ausgeführte Konfigurationsaktionen darstellen, in einem Konfigurationsendgerät;
Empfangen eines Zeitpunkts, auf dessen Konfigurationseinstellungen ein Benutzer die Konfiguration der elektronischen intelligenten Einrichtung zurücksetzen möchte, als Eingabe von dem Benutzer;
Rückgängigmachen (516) der Konfigurationsaktionen, die nach dem vom Benutzer empfangenen Zeitpunkt auf der intelligenten elektronischen Einrichtung durchgeführt worden sind.

10. Verfahren nach Anspruch 6, **dadurch gekennzeichnet, dass** das Verfahren Folgendes umfasst:
Speichern (508, 520) von auf unterschiedlichen Konfigurationsendgeräten erzeugten Änderungsaufzeichnungen in getrennten Datenbanken;
Synchronisieren (510, 522) der Änderungsaufzeichnungen der getrennten Datenbanken durch Austauschen einer oder mehrerer Änderungsaufzeichnungen dazwischen.

11. Computerprogrammprodukt, das ein Computerprogramm mit Anweisungen zum Ausführen eines Computerprozesses gemäß einem Verfahren nach einem der vorhergehenden Ansprüche 6 bis 10 bei Ausführung auf Computern codiert.

## Revendications

1. Un agencement de configuration d'un dispositif électronique intelligent d'un système d'alimentation électrique, comprenant
des moyens pour établir (332) une session de configuration depuis un dispositif de configuration par une liaison de communication pour la configuration d'un dispositif électronique intelligent (320) ;
des moyens pour exécuter (332) au moins une action de configuration sur le dispositif électronique intelligent (320), des moyens pour créer (338) un enregistrement de changement associé à l'action de configuration de la session de configuration ;
des moyens pour stocker (344) l'enregistrement de changement dans une base de données prévue sur le dispositif de configuration ou séparée du dispositif de configuration effectuant la session de configuration, afin de permettre l'utilisation future de l'information contenue dans l'enregistrement de changement, **caractérisé en ce que** l'agencement comprend :
des moyens pour stocker l'enregistrement de changement temporairement en local sur le dispositif électronique intelligent (320) si la session de configuration est effectuée en local sur le dispositif électronique intelligent (320) en utilisant une interface de configuration physique du dispositif électronique (320) ou par un terminal de configuration ne stockant pas l'enregistrement de changement ;
des moyens pour fournir l'enregistrement de changement stocké à un terminal de configuration distant en relation avec une session de configuration suivante effectuée sur le dispositif électronique intelligent (320) ; et
des moyens pour supprimer dans le dispositif électronique intelligent (320) l'enregistrement de changement stocké temporairement lorsque l'enregistrement de changement stocké a été fourni au dispositif de configuration distant.

2. Un agencement selon la revendication 1, **caractérisé en ce que** l'enregistrement de changement comprend au moins un élément d'un ensemble d'éléments comprenant : un identifiant de session identifiant de façon unique la session de configuration parmi les autres sessions de configuration, un identifiant du dispositif électronique intelligent (320), des informations sur l'exécutant de la session de configuration, la date et / ou l'heure de la session de configuration, et des informations sur une ou plusieurs actions de configuration de la session de configuration.

3. Un agencement selon la revendication 1, **caractérisé en ce que** l'agencement comprend :
des moyens pour lire (344) une liste de changements comprenant une pluralité d'enregistrements de changement de configuration représentant des actions effectuées sur le dispositif électronique intelligent (320) ;
des moyens pour recevoir (330), en tant qu'entrée opérée par un utilisateur (300), une sélection d'une ou plusieurs actions de configuration provenant de la liste de changements que l'utilisateur souhaite annuler ; et
des moyens pour configurer (346) le dispositif électronique intelligent de telle sorte que une ou plusieurs actions de configuration sélectionnées dans la liste de changements sont annulées.

4. Un agencement selon la revendication 1, **caractérisé en ce que** l'agencement comprend :
des moyens pour lire (312) une liste de changements comprenant une pluralité d'enregistrements de changement représentant des actions de configuration effectuées sur le dispositif électronique intelligent ;
des moyens pour recevoir (300), en tant qu'entrée opérée par un utilisateur, une durée de temps, des paramètres de configuration auxquels l'utilisateur souhaite ramener la configuration du dispositif électronique intelligent (320) ; et
des moyens pour configurer (346) le dispositif électronique intelligent (320) de telle sorte que toutes les actions de configuration qui ont été effectuées sur le dispositif électronique intelligent (320) après la durée de temps saisie par l'utilisateur (300) soient annulées.

5. Un agencement selon la revendication 1, **caractérisé en ce que** l'agencement comprend :
des moyens pour stocker les enregistrements de changement créés sur différents terminaux de configuration (210, 212) dans des bases de données distinctes (214A, 214B) ; et
des moyens pour synchroniser les enregistrements de changement des bases de données distinctes (214A, 214B) en échangeant un ou plusieurs enregistrements de changement entre elles.

6. Un procédé de configuration d'un dispositif électronique intelligent d'un réseau d'alimentation électrique, comprenant :
l'établissement (400) d'une session de configuration à partir d'un dispositif de configuration au moyen d'une liaison de communication pour la configuration d'un dispositif électronique intelligent ;
l'exécution (404) d'au moins une action de configuration sur le dispositif électronique intelligent,
la création d'un enregistrement de changement associé à l'action de configuration de la session de configuration ; et
le stockage (408) de l'enregistrement de changement dans une base de données prévue sur le dispositif de configuration ou séparée du dispositif de configuration effectuant la session de configuration, pour permettre l'utilisation future de l'information contenue dans l'enregistrement de changement, **caractérisé par** :
le stockage de l'enregistrement de changement temporairement en local sur le dispositif électronique intelligent (320) si la session de configuration est effectuée en local sur le dispositif électronique intelligent (320), en utilisant une interface de configuration physique du dispositif électronique (320), ou par un terminal de configuration ne stockant pas l'enregistrement de changement ;
la fourniture de l'enregistrement de changement stocké à un terminal de configuration distant en relation avec une session de configuration suivante effectuée sur le dispositif électronique intelligent (320) ; et
la suppression, sur le dispositif électronique intelligent (320), de l'enregistrement de changement stocké temporairement lorsque l'enregistrement de changement stocké a été fourni au dispositif de configuration distant.

7. Procédé selon la revendication 6, **caractérisé en ce que** l'enregistrement de changement comprend au moins un élément d'un ensemble d'éléments, comprenant : un identifiant de session identifiant de façon unique la session de configuration par rapport à d'autres sessions de configuration, un identifiant du dispositif électronique intelligent, des informations sur l'exécutant de la session de configuration, l'heure de la session de configuration, et des informations relatives à une ou plusieurs actions de configuration faites pendant la session de configuration.

8. Un procédé selon la revendication 6, **caractérisé en ce que** le procédé comprend :
la lecture (514), dans un terminal de configuration, d'une liste de changements comprenant une pluralité d'enregistrements de changement représentant des actions de configuration effectuées sur le dispositif électronique intelligent ;
la réception, en tant qu'entrée opérée par un utilisateur, d'une sélection d'une ou plusieurs actions de configuration provenant de la liste de changements que l'utilisateur souhaite annuler ; et
la configuration (516) du dispositif électronique intelligent de telle sorte qu'une ou plusieurs actions de configuration sélectionnées dans la liste de changements soient annulées.

9. Un procédé selon la revendication 6, **caractérisé en ce que** le procédé comprend :
la lecture (514), dans un terminal de configuration, d'une liste de changements comprenant une pluralité d'enregistrements de changement représentant des actions de configuration effectuées sur le dispositif électronique intelligent ;
la réception, en tant qu'entrée opérée par un utilisateur, d'une durée de temps, des paramètres de configuration auxquels l'utilisateur souhaite ramener la configuration du dispositif électronique intelligent ;
l'annulation (516) des actions de configuration qui ont été effectuées sur le dispositif électronique intelligent après la durée de temps reçu depuis l'utilisateur.

10. Un procédé selon la revendication 6, **caractérisé en ce que** le procédé comprend :
le stockage (508, 520) d'enregistrements de changement créés sur des terminaux de configuration différents dans des bases de données distinctes ;
la synchronisation (510, 522) des enregistrements de changement des bases de données distinctes en échangeant un ou plusieurs enregistrements de changement entre elles.

11. Un produit de programme informatique codant un programme informatique d'instructions pour exécuter un processus d'ordinateur selon un procédé tel que défini par l'une quelconque des revendications précédentes 6 à 10 lorsqu'il est exécuté sur des ordinateurs.
